# EUROPÄISCHE PATENTSCHRIFT

(11) **EP 3 744 809 B1**
(45) Veröffentlichungstag und Bekanntmachung des Hinweises auf die Patenterteilung: **29.12.2021**
(21) Anmeldenummer: 19176720.1
(22) Anmeldetag: 27.05.2019
(51) Int. Cl.: C09K 9/02

(54) **THERMOCHROMER KUNSTSTOFFFORMKÖRPER MIT IRREVERSIBLER FARBÄNDERUNG SOWIE GEMISCH UND VERFAHREN ZU DESSEN HERSTELLUNG**
THERMOCHOMIC PLASTIC MOULD WITH IRREVERSIBLE COLOUR ALTERATION AND MIXTURE AND METHOD FOR THE PRODUCTION OF SAME
CORPS MOULÉ EN MATIÈRE PLASTIQUE THERMOCHROMIQUE À CHANGEMENTS IRRÉVERSIBLES DE COULEUR AINSI QUE MÉLANGE ET LEUR PROCÉDÉ DE FABRICATION

(43) Veröffentlichungstag der Anmeldung: 02.12.2020
(73) Patentinhaber: FRAUNHOFER-GESELLSCHAFT zur Förderung der angewandten Forschung e.V., 80686 München (DE)
(72) Erfinder: Ruhmann, Ralf, 14476 Potsdam (DE); Wagner, Jürgen, 14476 Potsdam (DE); Bayer, Lisa Marie, 14476 Potsdam (DE); Christian, Rabe, 14476 Potsdam (DE); Eberhardt, Volker, 14476 Potsdam (DE)
(74) Vertreter: Pfenning, Meinig & Partner mbB

(56) Entgegenhaltungen:
- EP-A2- 1 026 221
- WO-A1-2008/125350
- WO-A1-2018/204640
- DE-B4- 10 339 442
- US-A1- 2013 172 182
- DATABASE WPI Week 201409 Thomson Scientific, London, GB; AN 2013-W87278 XP002795543, & CN 103 333 582 A (UNIV JIANGSU SCI & TECHNOLOGY) 2. Oktober 2013 (2013-10-02)

## Beschreibung

Die vorliegende Erfindung betrifft ein Gemisch zur Herstellung eines thermochromen Kunststoffformkörpers mit irreversibler Farbänderung. Das Gemisch umfasst mindestens einen thermoplastischen Kunststoff, mindestens einen Farbstoff, mindestens ein Schmelzmittel und mindestens eine Entwicklervorstufe. Die mindestens eine Entwicklervorstufe kann durch Bestrahlung bei einer Temperatur unterhalb der Schalttemperatur des thermochromen Kunststoffformkörpers zu mindestens einem Entwickler umgesetzt werden. Im Weiteren betrifft die vorliegende Erfindung auch einen mit dem Gemisch herstellbaren thermochromen Kunststoffformkörper mit irreversibler Farbänderung sowie ein Verfahren zu dessen Herstellung. Zudem betrifft die vorliegende Erfindung ein den thermochromen Kunststoffformkörper enthaltendes mehrschichtiges Verbundsystem sowie die Verwendung des thermochromen Kunststoffformkörpers bzw. des genannten mehrschichtigen Verbundsystems.

Thermochrome Materialien verändern reversibel oder irreversibel ihre Farbe in Abhängigkeit von der Temperatur. Umfassend werden Beispiele und theoretische Hintergründe beschrieben in Thermochromic Phenomena in Polymers (A. Seeboth und D. Lötzsch, Smithers Rapra Technology Ltd., 2008) und Thermochromic and Thermotropic Materials (A. Seeboth und D. Lötzsch, Pan Stanford Publishing, 2014).

Insbesondere reversibel schaltende thermochrome Komposite, bestehend aus einem Leukofarbstoff, einem Schmelzmittel und einem Entwickler, sind bekannt und in mikroverkapselter Form als thermochrome Pigmente kommerziell erhältlich. In dieser Form können die thermochromen Pigmente in Kunststoffe, Lacke, Druckfarben u.ä. dotiert werden, so dass die erhaltenen Materialien bei Temperaturerhöhung eine Farbveränderung zeigen. Bei Temperaturerniedrigung kehren die Materialien wieder in ihren Ausgangsfarbzustand zurück. Auch eine Dotierung der Komponenten des reversibel thermochromen Komposits zu Kunststoffen in unverkapselter Form vor der Extrusion zu Kunststofffolien ist beschrieben (DE 103 39 442 B4).

WO 2008/15350 A1 beschreibt ein thermochromes Komposit. Das Schaltverhalten des Komposits kann dabei sowohl reversibel als auch irreversibel sein. Das Komposit ist ein thermochromes Material mit inversen thermochromen Eigenschaften, wobei das Komposit bei steigender Temperatur von einem farblosen in einen farbigen Zustand übergeht, enthaltend Farbstoff, Entwickler und Schmelzmittel sowie anorganischen Füllstoff.

Durch Auswahl geeigneter Schmelzmittel mit einer großen Hysterese zwischen Schmelztemperatur bei Erwärmung und Erstarrungstemperatur beim Abkühlen sind auch thermochrome Komposite mit einem quasi irreversibel thermochromen Farbverhalten unter normalen Gebrauchsbedingungen möglich (JP2007332232 A, JP2003315167 A). Auch diese thermochromen Komposite sind in mikroverkapselter Form als thermochromes Pigment kommerziell erhältlich. Beim Abkühlen auf sehr niedrige Temperaturen unterhalb der Erstarrungstemperatur des eingebrachten Schmelzmittels nehmen diese Komposite ihre ursprüngliche Farbe wieder an. Eine vollkommene Irreversibilität ist dadurch mit diesen Materialien nicht möglich.

Während die reversiblen thermochromen Polymere zum Stand der Technik gehören, gibt es nach wie vor keine thermochromen Komposite mit irreversibler Farbanzeige, die für typische Prozesstechnologien thermoplastischer Polymere insbesondere für Extrusionsverfahren geeignet sind. Eine Schwierigkeit bei der Realisierung thermoplastischer Polymere mit irreversibler Farbanzeige ist, dass die angestrebten Schalttemperaturen weit unterhalb der Verarbeitungstemperaturen der Polymere liegen. Sowohl die Einbettung von Additiven als auch die Formung der thermoplastischen Kunststoffe erfolgen bei der Herstellung von Folien durch Extrusion in der Schmelze, z.B. bei > 180 °C. Der direkte Zusatz von irreversibel schaltenden Kompositen zum thermoplastischen Polymer vor dessen Verarbeitung in Analogie zu den reversiblen Systemen scheitert folglich, da die Farbreaktion bereits während der Extrusion erfolgen würde.

Weiterentwicklungen in dieser Richtung würden das Anwendungsspektrum der thermochromen Polymere erheblich erweitern, da sich neue technologische Möglichkeiten eröffnen. So kann eine, zu einem früheren Zeitpunkt stattgefundene Überschreitung einer Grenztemperatur, damit detektiert werden.

Ausgehend hiervon war es die Aufgabe der vorliegenden Erfindung einen thermochromen Kunststoffformkörper mit irreversibel thermochromen Eigenschaften anzugeben, der unter Verwendung typischer Verfahren der Kunststoffverarbeitung wie z.B. Extrusion, Spritzguss oder Kalandrieren herstellbar ist. Zudem war es die Aufgabe der vorliegenden Erfindung ein Gemisch sowie ein Verfahren zur Herstellung eines solchen thermochromen Kunststoffformkörpers anzugeben.

Diese Aufgabe wird bezüglich eines Gemischs zur Herstellung eines thermochromen Kunststoffformkörpers mit den Merkmalen des Patentanspruchs 1, bezüglich eines Verfahrens zur Herstellung eines thermochromen Kunststoffformkörpers mit den Merkmalen des Patentanspruchs 8 und bezüglich eines thermochromen Kunststoffformkörpers mit den Merkmalen des Patentanspruchs 14 gelöst. Patentanspruch 17 betrifft ein mehrschichtiges Verbundsystem, welches den erfindungsgemäßen thermochromen Kunststoffformkörper enthält. Die Patentansprüche 18 und 19 geben Verwendungsmöglichkeiten des erfindungsgemäßen thermochromen Kunststoffformkörpers bzw. des erfindungsgemäßen mehrschichtigen Verbundsystems an. Die jeweilig abhängigen Patentansprüche stellen dabei vorteilhafte Weiterbildungen dar.

Erfindungsgemäß wird somit ein Gemisch zur Herstellung eines thermochromen Kunststoffformkörpers mit irreversibler Farbänderung angegeben. Das Gemisch umfasst mindestens einen thermoplastischen Kunststoff, mindestens einen Farbstoff, mindestens ein Schmelzmittel und mindestens eine Entwicklervorstufe. Die mindestens eine Entwicklervorstufe kann durch Bestrahlung bei einer Temperatur unterhalb der Schalttemperatur des (aus dem Gemisch herstellbaren) thermochromen Kunststoffformkörpers zu mindestens einem Entwickler umgesetzt werden.

Aus dem erfindungsgemäßen Gemisch kann ein thermochromer Kunststoffformkörper mit irreversibler Farbänderung hergestellt werden. Die irreversible Farbänderung des thermochromen Kunststoffformkörpers kann dadurch erreicht werden, dass der thermochrome Kunststoffformkörper für eine gewisse Zeit einer Temperatur ausgesetzt wird, die der Schalttemperatur des thermochromen Kunststoffformkörpers entspricht oder über dieser Schalttemperatur liegt. Die Schalttemperatur des thermochromen Kunststoffformkörpers liegt dabei bevorzugt im Bereich von 0 °C bis 200 °C, besonders bevorzugt im Bereich von 10 °C bis 100 °C, ganz besonders bevorzugt im Bereich von 20 °C bis 80 °C. Die Zeit, die der thermochrome Kunststoffformkörper der Temperatur gleich oder oberhalb seiner Schalttemperatur ausgesetzt werden muss, um die irreversible Farbänderung zu erreichen, liegt bevorzugt im Bereich von 1 s bis 24 h, besonders bevorzugt im Bereich von 1 min bis 60 min, ganz besonders bevorzugt im Bereich von 10 min bis 30 min.

Der mindestens eine Farbstoff und der mindestens eine Entwickler sowie deren Mengenverhältnis sind innerhalb des erfindungsgemäßen Gemischs so gewählt, dass ein aus dem Gemisch hergestellter Kunststoffformkörper irreversibel thermochrome Eigenschaften aufweist. Dem Fachmann ist hierbei ohne Weiteres geläufig, welche Kombinationen von Farbstoff und Entwickler in welchem Mengenverhältnis zu irreversibel thermochromen Eigenschaften führen. Als Farbstoff können beispielsweise Leukofarbstoffe, Indikatorfarbstoffe oder Mischungen eingesetzt werden. Als Entwickler kann beispielsweise eine Photosäure eingesetzt werden, sodass als Entwicklervorstufe beispielsweise ein Photosäuregenerator einsetzbar ist. Um zu erreichen, dass der hergestellte thermochrome Formkörper eine irreversible Farbänderung aufweist, kann das Mengenverhältnis von Farbstoff und Entwicklervorstufe im erfindungsgemäßen Gemisch so gewählt werden, dass ein Überschuss an Entwicklervorstufe im Vergleich zum Farbstoff im Gemisch vorliegt. Das genaue Verhältnis zwischen Farbstoff und Entwicklervorstufe (bzw. Entwickler) zum Erreichen einer irreversiblen Farbänderung ist dabei abhängig von dem im Gemisch eingesetzten speziellen Farbstoff sowie der im Gemisch eingesetzten speziellen Entwicklervorstufe (bzw. dem später daraus erhaltenen speziellen Entwickler). Beispielsweise liegt das gewichtsprozentuale Verhältnis zwischen Farbstoff und Entwicklervorstufe im erfindungsgemäßen Gemisch zwischen 1 : 1,1 und 1 : 5, vorzugsweise zwischen 1 : 1,5 und 1 : 3.

Das erfindungsgemäße Gemisch zeichnet sich besonders dadurch aus, dass es mindestens eine Entwicklervorstufe umfasst, die durch Bestrahlung bei einer Temperatur unterhalb der Schalttemperatur des thermochromen Kunststoffformkörpers zu mindestens einem Entwickler umgesetzt werden kann. Aufgrund dessen ist es möglich, das erfindungsgemäße Gemisch einem Verfahren zur Herstellung eines thermochromen Kunststoffformkörpers zu unterziehen, bei welchem eine thermoplastische Verarbeitung des Gemischs bei einer Temperatur oberhalb der Schalttemperatur des herzustellenden thermochromen Kunststoffformkörpers erfolgt. Würde das Gemisch den fertigen Entwickler statt der Entwicklervorstufe enthalten, würde bereits bei einer thermoplastischen Verarbeitung des Gemischs bei einer Temperatur oberhalb der Schalttemperatur des herzustellenden thermochromen Kunststoffformkörpers die irreversible Farbänderung stattfinden, sodass der hergestellte Kunststoffformkörper nicht mehr die gewünschten thermochromen Eigenschaften aufweist, da sich die Farbe nicht nochmals ändern kann. Dadurch, dass das erfindungsgemäße Gemisch lediglich die Entwicklervorstufe anstelle des fertigen Entwicklers umfasst, kann eine vorzeitige irreversible Farbänderung während der thermoplastischen Verarbeitung des Gemischs verhindert werden. Dadurch, dass die Entwicklervorstufe durch Bestrahlung unterhalb der Schalttemperatur des herzustellenden thermochromen Kunststoffformkörpers zum Entwickler umgesetzt werden kann, ist eine problemlose Umsetzung der Entwicklervorstufe zum Entwickler möglich, wobei die Umsetzung auf einfache Weise im Anschluss an die thermoplastische Verarbeitung des Gemischs erfolgen kann, so dass der schließlich erhaltene thermochrome Kunststoffformkörper irreversibel thermochrome Eigenschaften aufweist. Hierbei ist es wesentlich, dass die durch Bestrahlung erfolgende Umsetzung bei einer Temperatur unterhalb der Schalttemperatur des herzustellenden thermochromen Kunststoffformkörpers erfolgen kann, da bei einer Bestrahlung bei einer Temperatur oberhalb der Schalttemperatur eine irreversible Farbänderung bereits direkt während der Bestrahlung erfolgen würde.

Durch Verwendung des erfindungsgemäßen Gemischs kann somit ein thermochromer Kunststoffformkörper mit irreversibel thermochromen Eigenschaften erhalten werden, der unter Verwendung typischer Verfahren der Kunststoffverarbeitung wie z.B. Extrusion, Spritzguss oder Kalandrieren herstellbar ist.

Eine bevorzugte Ausführungsform des erfindungsgemäßen Gemischs zeichnet sich dadurch aus, dass es sich bei der mindestens einen Entwicklervorstufe um mindestens einen Photosäuregenerator handelt. Der Photosäuregenerator kann dann durch Bestrahlung, beispielsweise durch UV-Bestrahlung, bei einer Temperatur oberhalb der Schalttemperatur des herzustellenden thermochromen Kunststoffformkörpers auf einfache Weise in eine als Entwickler fungierende Photosäure umgesetzt werden. Photosäuregeneratoren sind somit besonders gut als Entwicklervorstufe geeignet. Der mindestens eine Photosäuregenerator ist vorzugsweise ausgewählt aus der Gruppe bestehend aus Triarylsulfoniumsalzen, Diaryliodoniumsalzen, Kombinationen von Triarylsulfoniumsalzen mit Salzen von Phenolen und/oder mit Salzen von Salicyl- und Gallussäurederivaten, Kombinationen von Diaryliodoniumsalzen mit Salzen von Phenolen und/oder mit Salzen von Salicyl- und Gallussäurederivaten, sowie Mischungen hiervon. Die mindestens eine Entwicklervorstufe bzw. der mindestens eine Photosäuregenerator ist vorzugsweise in einer Menge von 0,1 bis 5 Gew.-% bezogen auf die Gesamtmasse des Gemischs im erfindungsgemäßen Gemisch enthalten.

In einer weiteren bevorzugten Ausführungsform des erfindungsgemäßen Gemischs ist das mindestens eine Schmelzmittel ausgewählt aus der Gruppe bestehend aus Zimtsäureestern, Aminen mit mindestens 6 Kohlenstoffatomen, Estern von Alkancarbonsäuren mit mindestens 12 Kohlenstoffatomen, 1-Alkanolen mit mindestens 8 Kohlenstoffatomen, Alkancarbonsäureamiden mit mindestens 8 Kohlenstoffatomen, sowie Mischungen hiervon. Das mindestens eine Schmelzmittel ist vorzugsweise in einer Menge von 0,1 bis 10 Gew.-% bezogen auf die Gesamtmasse des Gemischs im erfindungsgemäßen Gemisch enthalten.

Durch Art und Menge des verwendeten Schmelzmittels kann der Temperaturbereich des irreversibel thermochromen Farbwechsels (d.h. die Schalttempe-ratur bzw. der Schalttemperaturbereich) des aus dem erfindungsgemäßen Gemisch herstellbaren thermochromen Kunststoffformkörpers eingestellt werden.

Eine weitere bevorzugte Ausführungsform des erfindungsgemäßen Gemischs ist dadurch gekennzeichnet, dass der mindestens eine Farbstoff ausgewählt ist aus der Gruppe bestehend aus Leukofarbstoffen, Indikatorfarbstoffen, sowie Mischungen hiervon. Besonders bevorzugt ist der mindestens eine Farbstoff ausgewählt aus der Gruppe bestehend aus Phthaliden, Indolinobenzospiropyranen, Phenothiazinen, Phthalazinonen, Phthalamidinen, Pyridopyridazonen, Pyrrolopyridinonen, Anilinen, Pyrrolen, Triphenylmethanfarbstoffen, Pyridiniumphenolatbetainen, Sulfophthaleinen, Thyraninen, Azofarbstoffen, Fluoranfarbstoffen, sowie Mischungen hiervon. Der mindestens eine Farbstoff ist vorzugsweise in einer Menge von 0,05 bis 2 Gew.-% bezogen auf die Gesamtmasse des Gemischs im erfindungsgemäßen Gemisch enthalten.

Die Mischung des mindestens einen Farbstoffs, des mindestens einen Schmelzmittels sowie der mindestens einen Entwicklervorstufe stellt das thermochrome Komposit dar.

Eine besonders bevorzugten Ausführungsform des erfindungsgemäßen Gemischs zeichnet sich dadurch aus, dass
- der mindestens eine Farbstoff ausgewählt ist aus der Gruppe bestehend aus Leukofarbstoffen, Indikatorfarbstoffen, sowie Mischungen hiervon, wobei der mindestens eine Farbstoff vorzugsweise ausgewählt ist aus der Gruppe bestehend aus Phthaliden, Indolinobenzospiropyranen, Phenothiazinen, Phthalazinonen, Phthalamidinen, Pyridopyridazonen, Pyrrolopyridinonen, Anilinen, Pyrrolen, Triphenylmethanfarbstoffen, Pyridiniumphenolatbetainen, Sulfophthaleinen, Thyraninen, Azofarbstoffen, Fluoranfarbstoffen, sowie Mischungen hiervon, und/oder
- das mindestens eine Schmelzmittel ausgewählt ist aus der Gruppe bestehend aus Zimtsäureestern, Aminen mit mindestens 6 Kohlenstoffatomen, Estern von Alkancarbonsäuren mit mindestens 12 Kohlenstoffatomen, 1-Alkanolen mit mindestens 8 Kohlenstoffatomen, Alkancarbonsäureamiden mit mindestens 8 Kohlenstoffatomen, sowie Mischungen hiervon, und/oder
- es sich bei der mindestens einen Entwicklervorstufe um mindestens einen Photosäuregenerator handelt, wobei der mindestens eine Photosäuregenerator vorzugsweise ausgewählt ist aus der Gruppe bestehend aus Triarylsulfoniumsalzen, Diaryliodoniumsalzen, Kombinationen von Triarylsulfoniumsalzen mit Salzen von Phenolen und/oder mit Salzen von Salicyl- und Gallussäurederivaten, Kombinationen von Diaryliodoniumsalzen mit Salzen von Phenolen und/oder mit Salzen von Salicyl- und Gallussäurederivaten, sowie Mischungen hiervon.

In einer weiteren bevorzugten Ausführungsform des erfindungsgemäßen Gemischs ist der mindestens eine thermoplastische Kunststoff ausgewählt aus der Gruppe bestehend aus Polyethylenen, Polypropylenen, Polyestern, Polyamiden, Polyvinylchloriden, Polystyrolen, cycloolefinischen Polymeren, sowie Copolymeren, Mischungen und Blends hiervon. Diese thermoplastischen Kunststoffe sind besonders zur Verwendung in irreversibel thermochromen Kunststoffformkörpern geeignet. Prinzipiell ist aber auch die Verwendung anderer gegenwärtig bei Extrusionsverfahren eingesetzter Polymere und Copolymere möglich.

Eine weitere bevorzugte Ausführungsform des erfindungsgemäßen Gemischs ist dadurch gekennzeichnet, dass das Gemisch
- 0,05 Gew.-% bis 2 Gew.-% des mindestens einen Farbstoffs bezogen auf das Gesamtgewicht des Gemischs umfasst, und/oder
- 0,1 Gew.-% bis 10 Gew.-% des mindestens einen Schmelzmittels bezogen auf das Gesamtgewicht des Gemischs umfasst, und/oder
- 0,1 Gew.-% bis 5 Gew.-% der mindestens einen Entwicklervorstufe bezogen auf das Gesamtgewicht des Gemischs umfasst.

In einer weiteren bevorzugten Ausführungsform des erfindungsgemäßen Gemischs enthält das Gemisch zusätzlich mindestens ein Pigment und/oder mindestens einen Permanent-Farbstoff. Auf diese Weise werden die im Gemisch enthaltenden thermochromen Komposite mit Pigmenten oder Permanentfarbstoffen kombiniert. Unter Einhaltung der Regeln zur subtraktiven oder additiven Farbmischung sind dadurch thermochrome Farbübergänge zwischen zwei oder mehreren Farben möglich.

Vorzugsweise besteht das erfindungsgemäße Gemisch aus dem mindestens einen thermoplastischen Kunststoff, dem mindestens einen Farbstoff, dem mindestens ein Schmelzmittel, der mindestens eine Entwicklervorstufe, und optional mindestens einem Pigment und/oder mindestens einem Permanentfarbstoff.

Die vorliegende Erfindung betrifft ferner ein Verfahren zur Herstellung eines thermochromen Kunststoffformkörpers mit irreversibler Farbänderung, umfassend die folgenden Schritte:
a) Herstellung eines erfindungsgemäßen Gemischs,
b) thermoplastische Verarbeitung des Gemischs, wodurch ein Kunststoffformkörper erhalten wird,
c) Bestrahlung des Kunststoffformkörpers, wodurch die mindestens eine Entwicklervorstufe zum mindestens einen Entwickler umgesetzt wird, wobei die Bestrahlung bei einer Temperatur unterhalb der Schalttemperatur des thermochromen Kunststoffformkörpers erfolgt.

In Schritt a) des Verfahrens wird somit zunächst ein Gemisch zur Herstellung des gewünschten thermochromen Kunststoffformkörpers mit irreversibler Farbänderung hergestellt. Dieses Gemisch umfasst somit mindestens einen thermoplastischen Kunststoff, mindestens einen Farbstoff, mindestens ein Schmelzmittel und mindestens eine Entwicklervorstufe, die durch Bestrahlung bei einer Temperatur unterhalb der Schalttemperatur des thermochromen Kunststoffformkörpers zu mindestens einem Entwickler umgesetzt werden kann. Hierbei gelten für die einzelnen Bestandteile des Gemischs die gleichen bevorzugten Ausführungsformen, die bereits im Rahmen des erfindungsgemäßen Gemischs angegeben wurden.

In Schritt b) erfolgt dann die thermoplastische Verarbeitung des in Schritt a) hergestellten Gemischs, wobei hierdurch ein Kunststoffformkörper erhalten wird. Dieser Kunststoffformkörper weist noch keine thermochromen Eigenschaften auf, da er lediglich die Entwicklervorstufe und noch nicht den fertigen Entwickler enthält. Die thermoplastische Verarbeitung kann bei einer Temperatur oberhalb der Schalttemperatur des thermochromen Kunststoffformkörpers erfolgen, z.B. bei einer Temperatur von 100 °C bis 300 °C. Dadurch, dass das Gemisch lediglich die Entwicklervorstufe und noch nicht den fertigen Entwickler umfasst, findet hierbei noch keine irreversible Farbänderung statt.

In Schritt c) erfolgt schließlich eine Bestrahlung des in Schritt b) erhaltenen Kunststoffformkörpers, durch welche die mindestens eine Entwicklervorstufe zum mindestens einen Entwickler umgesetzt wird. Die Bestrahlung erfolgt bei einer Temperatur unterhalb der Schalttemperatur des thermochromen Kunststoffformkörpers. Dadurch, dass die durch Bestrahlung erfolgende Umsetzung bei einer Temperatur unterhalb der Schalttemperatur des herzustellenden thermochromen Kunststoffformkörpers erfolgt, kann verhindert werden, dass bei der Bestrahlung bereits eine (vorzeitige) irreversible Farbänderung erfolgt. Somit weist der durch Schritt c) erhaltene Kunststoffformkörper irreversibel thermochrome Eigenschaften auf, d.h. der erhaltene thermochrome Kunststoffformkörper ändert bei seiner Schalttemperatur oder bei einer Temperatur oberhalb seiner Schalttemperatur irreversibel seine Farbe.

Das erfindungsgemäße Verfahren ist in der Schweiß- und Fügetechnik einsetzbar.

Eine bevorzugte Variante des erfindungsgemäßen Verfahrens zeichnet sich dadurch aus, dass bei der Herstellung des Gemischs in Schritt a)
- der mindestens eine Kunststoff mit einem, mehreren oder allen weiteren Bestandteilen des Gemischs mittels Compoundierung, vorzugsweise in einem Zweischnecken-Extruder, vermischt wird, und/oder
- der mindestens eine Farbstoff, das mindestens eine Schmelzmittel, die mindestens eine Entwicklervorstufe und gegebenenfalls weitere Zusatzstoffe in Form eines Masterbatches eingesetzt werden.

Es ist möglich, das thermochrome Komposit dem Kunststoff vor der thermoplastischen Verarbeitung als Masterbatch, das heißt in Form von Granulaten mit Gehalten an Farbmitteln, die höher sind als in der Endanwendung, zuzugeben. Dadurch erhöhen sich die Prozesssicherheit und die Verarbeitbarkeit des thermochromen Komposits.

Eine weitere bevorzugte Variante des erfindungsgemäßen Verfahrens ist dadurch gekennzeichnet, dass die thermoplastische Verarbeitung in Schritt b)
- mittels Einschicht-Folienextrusion, Mehrschichtfolienextrusion, Spritzguss, Tiefziehen, Kalandrieren, Spritzblasformen und/oder Rotationsformen erfolgt, und/oder
- bei einer Temperatur oberhalb der Schalttemperatur des thermochromen Kunststoffformkörpers, vorzugsweise bei einer Temperatur von 100 °C bis 300 °C, erfolgt, und/oder
- so erfolgt, dass aus dem Gemisch zunächst ein Kunststoffgranulat hergestellt wird, welches anschließend zum Kunststoffformkörper weiterverarbeitet wird, wobei das Weiterverarbeiten zum Kunststoffformkörper vorzugsweise durch Extrusion erfolgt.

Eine weitere bevorzugte Variante des erfindungsgemäßen Verfahrens zeichnet sich dadurch aus, dass die Bestrahlung in Schritt c) mit
- UV-Licht, vorzugsweise im Wellenlängenbereich von 250 nm bis 405 nm, und/oder
- Elektronenstrahlen, und/oder
- γ-Strahlen
erfolgt. Diese Bestrahlungsarten weisen eine für die Umsetzung der Entwicklervorstufe zum Entwickler geeignete Energiedichte auf. Die genaue Intensität bzw. Energie der verwendeten Strahlung hängt dabei auch von der Verarbeitungsform ab. So benötigt beispielsweise ein dickeres Material eine höhere Strahlungsintensität und eine höhere Strahlungsdurchdringung als ein dünneres Material.

In einer weiteren bevorzugten Variante des erfindungsgemäßen Verfahrens erfolgen die Schritte a) und b) unter Ausschluss von Tageslicht, vorzugsweise unter Gelblicht. Um eine vorzeitige Aktivierung der Komponenten des thermochromen Komposits (d.h. eine vorzeitige Umsetzung der Entwicklervorstufe zum Entwickler) zu verhindern, sollten alle Arbeiten zur Herstellung des thermochromen Kunststoffformkörpers mit irreversibler Farbänderung unter Ausschluß entsprechender Strahlungsquellen (d.h. unter Ausschluss von Strahlungsquellen, die zu einer Umsetzung der Entwicklervorstufe zum Entwickler führen) ausgeführt werden. Bei der Aktivierung mit UV-Licht ist damit auch auf den Ausschluß von Tageslicht zu achten. Die Arbeiten können in diesem Fall beispielsweise in Gelblicht-Räumen stattfinden. Weiterhin sollte auch die Lagerung der irreversibel thermochromen Formköper nach deren Herstellung unter Ausschluss der verwendeten Strahlungsquellen, das heißt bei UV-Aktivierung unter Ausschluss von Tageslicht und z.B. im Gelblicht, und nach ihrer Aktivierung unterhalb ihrer Schalttemperatur erfolgen.

Eine weitere bevorzugte Variante des erfindungsgemäßen Verfahrens ist dadurch gekennzeichnet, dass der Kunststoffformkörper im Anschluss an Schritt b) oder im Anschluss an Schritt c) zu einem mehrschichtigen Verbundsystem weiterverarbeitet wird, welches den Kunststoffformkörper sowie mindestens ein weiteres Material ausgewählt aus der Gruppe bestehend aus Kunststoffen, Metallen, Papier, Karton sowie Mischungen hiervon enthält oder daraus besteht. Auf diese Weise kann der thermochrome Kunststoff mit einer beliebigen Schichtdicke zur Modifizierung mit ergänzenden Eigenschaften mit einem weiteren Material oder auch mit mehreren Materialien kombiniert werden. Dadurch lassen sich Multischichtsysteme mit unterschiedlicher Anordnung fertigen. Das mehrschichtige Verbundsystem enthält beispielsweise den thermochromen Kunststoffformkörper in Form einer Schicht und zusätzlich mehrere, z.B. zwei, Schichten aus einem weiteren Material. Die Schicht des thermochromen Kunststoffformkörpers kann hierbei zwischen zwei Schichten aus einem weiteren Material angeordnet sein.

Die vorliegende Erfindung betrifft zudem auch einen thermochromen Kunststoffformkörper mit irreversibler Farbänderung, umfassend mindestens einen thermoplastischen Kunststoff, mindestens einen Farbstoff, mindestens ein Schmelzmittel und mindestens einen Entwickler, wobei der mindestens eine Entwickler dadurch herstellbar ist, dass mindestens eine Entwicklervorstufe durch Bestrahlung unterhalb der Schalttemperatur des thermochromen Kunststoffformkörpers zum mindestens einem Entwickler umgesetzt wird.

Bei dem mindestens einen Entwickler handelt es sich bevorzugt um mindestens eine Photosäure, die dadurch herstellbar ist, dass mindestens ein Photosäuregenerator durch Bestrahlung unterhalb der Schalttemperatur des thermochromen Kunststoffformkörpers zur mindestens einen Photosäure umgesetzt wird. Vorzugweise ist der mindestens eine Photosäuregenerator dabei ausgewählt aus der Gruppe bestehend aus Triarylsulfoniumsalzen, Diaryliodoniumsalzen, Kombinationen von Triarylsulfoniumsalzen mit Salzen von Phenolen und/oder mit Salzen von Salicyl- und Gallussäurederivaten, Kombinationen von Diaryliodoniumsalzen mit Salzen von Phenolen und/oder mit Salzen von Salicyl- und Gallussäurederivaten, sowie Mischungen hiervon.

Der erfindungsgemäße thermochrome Kunststoffformkörper kann aus dem erfindungsgemäßen Gemisch zur Herstellung eines thermochromen Kunststoffformkörpers mit irreversibler Farbänderung hergestellt werden. Für die einzelnen Bestandteile des erfindungsgemäßen thermochromen Kunststoffformkörpers gelten somit die gleichen bevorzugten Ausführungsformen, die bereits für das erfindungsgemäße Gemisch angegeben wurden, auf entsprechende Weise.

Die irreversible Farbänderung des thermochromen Kunststoffformkörpers kann dadurch erreicht werden, dass der thermochrome Kunststoffformkörper für eine gewisse Zeit einer Temperatur ausgesetzt wird, die der Schalttempe-ratur des thermochromen Kunststoffformkörpers entspricht oder über dieser Schalttemperatur liegt. Die Schalttemperatur des thermochromen Kunststoffformkörpers liegt dabei bevorzugt im Bereich von 0 °C bis 200 °C, besonders bevorzugt im Bereich von 10 °C bis 100 °C, ganz besonders bevorzugt im Bereich von 20 °C bis 80 °C. Die Zeit, die der thermochrome Kunststoffformkörper der Temperatur gleich oder oberhalb der Schalttemperatur ausgesetzt werden muss, um die irreversible Farbänderung zu erreichen, liegt bevorzugt im Bereich von 1 s bis 24 h, besonders bevorzugt im Bereich von 1 min bis 60 min, ganz besonders bevorzugt im Bereich von 10 min bis 30 min.

Eine bevorzugte Ausführungsform des erfindungsgemäßen thermochromen Kunststoffformkörpers zeichnet sich dadurch aus, dass der thermochrome Kunststoffformkörper in Form einer Folie vorliegt.

Weiterhin ist es bevorzugt, dass der erfindungsgemäße thermochrome Kunststoffformkörper gemäß dem erfindungsgemäßen Verfahren zur Herstellung eines thermochromen Kunststoffformkörpers mit irreversibler Farbänderung herstellbar ist oder hergestellt ist.

Die vorliegende Erfindung betrifft ferner ein mehrschichtiges Verbundsystem, welches einen erfindungsgemäßen thermochromen Kunststoffformkörper sowie mindestens ein weiteres Material ausgewählt aus der Gruppe bestehend aus Kunststoffen, Metallen, Papier, Karton sowie Mischungen hiervon enthält oder daraus besteht. Das mehrschichtige Verbundsystem enthält beispielsweise den thermochromen Kunststoffformkörper in Form einer Schicht und zusätzlich mehrere, z.B. zwei, Schichten aus einem weiteren Material. Die Schicht des thermochromen Kunststoffformkörpers kann hierbei zwischen zwei Schichten aus einem weiteren Material angeordnet sein.

Zudem betrifft die vorliegende Erfindung auch die Verwendung eines erfindungsgemäßen thermochromen Kunststoffformkörper oder eines erfindungsgemäßen mehrschichtigen Verbundsystems als Verpackungsfolie zur Verpackung von thermosensitiven Erzeugnissen und vorzugsweise zur Temperaturkontrolle während der Lagerung und/oder des Transports von Pharmaerzeugnissen, Lebensmitteln, insbesondere Fleisch, nativem Gewebe sowie Kulturen von Pilzen und Bakterien.

Weiterhin betrifft die vorliegende Erfindung die Verwendung eines erfindungsgemäßen thermochromen Kunststoffformkörpers oder eines erfindungsgemäßen mehrschichtigen Verbundsystems zur Kontrolle der Temperaturen bei thermischen Verarbeitungsschritten von härtenden Kunststoffen und/oder beim thermischen Fügen von Kunststoffen durch Schweißen und Verpressen.

Anhand der nachfolgenden Beispiele soll die vorliegende Erfindung näher erläutert werden, ohne diese auf die hier gezeigten spezifischen Ausführungsformen und Parameter zu beschränken.

### Ausführungsbeispiele

Die in den Beispielen angeführten technologischen Parameter, wie die Verarbeitungsbedingungen während der Extrusion und Compoundierung, die Art des verwendeten Kunststoffs und die Art und Menge der zugesetzten Komponenten des thermochromen Komposits, lassen sich, wie für den Fachmann sofort erkennbar, in vielfältiger Art und Weise variieren und kombinieren. Weiterhin ist für den Fachmann ersichtlich, dass zur Verbesserung der Anwendungseigenschaften der thermochromen Kunststofffolie mit irreversibler Farbänderung der Zusatz weiterer Additive wie beispielsweise Licht- und UV-Stabilisatoren, Füllstoffe oder Dispergiermittel möglich ist.

Die in den folgenden Beispielen beschriebene Herstellung der thermochromen Kunststofffolien mit irreversibler Farbänderung erfolgt unter Ausschluss von Tageslicht in Gelblichträumen.

### Beispiel 1

1000 g Polyethylen-Granulat, 2,08 g Kristallviolettlakton, 6,4 g einer 50%igen Lösung einer Mischung von Triarylsulfoniumhexafluorophosphaten in Propylencarbonat und 25 g Tridodecylamin werden gut vermischt. Die Mischung wird in einem Einschneckenextruder bei Temperaturen von 190 °C bis 205 °C und einer Schneckendrehzahl von 20 U/min durch eine Flachdüse zu einer Folie der Dicke 100 µm verarbeitet. Die Folie ist farblos. Nach Belichtung mit UV-Licht einer Wellenlänge von 365 nm und einer Leistung von 3,5 mW/cm² für 10 min bei -12 °C zeigt die Folie eine grünliche Farbe. Eine Erwärmung der Folie auf 20 °C führt zum irreversiblen Farbverlust der Folie.

### Beispiel 2

1000 g Polyethylen-Granulat, 2,06 g YAMADA Red 500 (CAS-Nr. 115392-27-3), 1,6 g einer 50%igen Lösung einer Mischung von Triarylsulfoniumhexafluorophosphaten in Propylencarbonat und 25 g N,N-Dioctadecylmethylamin werden gut vermischt. Die Mischung wird in einem Einschneckenextruder bei Temperaturen von 190 °C bis 205 °C und einer Schneckendrehzahl von 20 U/min durch eine Flachdüse zu einer Folie der Dicke 100 µm verarbeitet. Die Folie ist farblos. Nach Belichtung mit UV-Licht der Wellenlänge 365 nm und einer Leistung von 3,5 mW/cm² für 10 min zeigt die Folie eine kräftig rosa Farbe. Eine Wärmebehandlung der Folie bei 50 °C für 10 min führt zum irreversiblen Farbverlust der Folie.

### Beispiel 3

1000 g Polyethylen-Granulat, 2,08 g Kristallviolettlakton, 8 g einer 50%igen Lösung einer Mischung von Triarylsulfoniumhexafluorophosphaten in Propylencarbonat, 18,04 g einer 28%igen Lösung von Poly(dimethylaminoethylmethacrylat) in Toluen und 48 g Palmitinsäuremethylester werden gut vermischt. Die Mischung wird in einem Einschneckenextruder bei Temperaturen von 190 °C bis 205 °C und einer Schneckendrehzahl von 20 U/min durch eine Flachdüse zu einer Folie der Dicke 100 µm verarbeitet. Die Folie ist farblos. Nach Belichtung mit UV-Licht der Wellenlänge 365 nm und einer Leistung von 3,5 mW/cm² für 10 min zeigt die Folie eine schwach hellblaue Farbe. Eine Wärmebehandlung der Folie bei 50 °C für 30 min führt zum irreversiblen Auftreten einer blauen Farbe der Folie.

### Beispiel 4

1000 g Polypropylen-Granulat, 1,2 g Kristallviolettlakton, 8 g einer 50%igen Lösung einer Mischung von Triarylsulfoniumhexafluorophosphaten in Propylencarbonat, 1,2 g Tetra-n-butylammonium-salicylat und 36 g Palmitinsäuremethylester werden gut vermischt. Die Mischung wird in einem Zweischneckenextruder bei Temperaturen von 150 °C bis 190 °C und einer Schneckendrehzahl von 20 U/min zu einem Strang verarbeitet, der nach Erkalten granuliert wird. Das Granulat wird in einem Einschneckenextruder bei Temperaturen von 210 °C bis 225 °C und einer Schneckendrehzahl von 20 U/min durch eine Flachdüse zu einer Folie der Dicke 100 µm verarbeitet. Die Folie ist farblos. Nach Belichtung mit UV-Licht der Wellenlänge 365 nm und einer Leistung von 3,5 mW/cm² für 10 min ist die Folie weiterhin farblos. Eine Wärmebehandlung der Folie bei 80 °C für 30 min führt zum irreversiblen Auftreten einer blauen Farbe der Folie.

### Beispiel 5

1000 g Polypropylen-Granulat, 1,6 g Kristallviolettlakton, 3,2 g einer 50%igen Lösung einer Mischung von Triarylsulfoniumhexafluorophosphaten in Propylencarbonat und 40 g Cinnamylcinnamat werden gut vermischt. Die Mischung wird in einem Zweischneckenextruder bei Temperaturen von 150 °C bis 190 °C und einer Schneckendrehzahl von 20 U/min zu einem Strang verarbeitet, der nach Erkalten granuliert wird. Das Granulat wird mit unmodifiziertem Poly-propylen in einem Flachfolienextrusionssystem aus zwei Einschneckenextrudern bei Temperaturen von 210 °C bis 225 °C und einer Schneckendrehzahl von 40 U/min durch eine Flachdüse zu einer Dreischichtfolie der Dicke 200 µm, bestehend aus einer thermochromen Mittelschicht und zwei nichtthermochromen Deckschichten, verarbeitet. Die Folie ist farblos. Nach Belichtung mit UV-Licht der Wellenlänge 365 nm und einer Leistung von 3,5 mW/cm² für 10 min ist die Folie weiterhin farblos. Eine Wärmebehandlung der Folie bei 80 °C für 30 min führt zum irreversiblen Auftreten einer blauen Farbe der Folie.

### Beispiel 6

1000 g Polypropylen-Granulat, 1,6 g Kristallviolettlakton, 3,2 g einer 50%igen Lösung einer Mischung von Triarylsulfoniumhexafluorophosphaten in Propylencarbonat, 40 g Cinnamylcinnamat und 0,2 g 1-Methylaminoanthrachinon werden gut vermischt. Die Mischung wird in einem Zweischneckenextruder bei Temperaturen von 150 °C bis 190 °C und einer Schneckendrehzahl von 20 U/min zu einem Strang verarbeitet, der nach Erkalten granuliert wird. Das Granulat wird mit unmodifiziertem Polypropylen in einem Flachfolienextrusionssystem aus zwei Einschneckenextrudern bei Temperaturen von 210 °C bis 225 °C und einer Schneckendrehzahl von 40 U/min durch eine Flachdüse zu einer Dreischichtfolie der Dicke 200 µm, bestehend aus einer thermochromen Mittelschicht und zwei nichtthermochromen Deckschichten, verarbeitet. Die Folie ist rot. Nach Belichtung mit UV-Licht der Wellenlänge 365 nm und einer Leistung von 3,5 mW/cm2 für 10 min ist die Folie weiterhin rot. Eine Wärmebehandlung der Folie bei 80 °C für 30 min führt zum irreversiblen Auftreten einer blauen Farbe der Folie.

## Patentansprüche

1. Gemisch zur Herstellung eines thermochromen Kunststoffformkörpers mit irreversibler Farbänderung, umfassend mindestens einen thermoplastischen Kunststoff, mindestens einen Farbstoff, mindestens ein Schmelzmittel und mindestens eine Entwicklervorstufe, die durch Bestrahlung bei einer Temperatur unterhalb der Schalttemperatur des thermochromen Kunststoffformkörpers zu mindestens einem Entwickler umgesetzt werden kann.

2. Gemisch gemäß dem vorhergehenden Anspruch, **dadurch gekennzeichnet, dass** es sich bei der mindestens einen Entwicklervorstufe um mindestens einen Photosäuregenerator handelt, wobei der mindestens eine Photosäuregenerator vorzugsweise ausgewählt ist aus der Gruppe bestehend aus Triarylsulfoniumsalzen, Diaryliodoniumsalzen, Kombinationen von Triarylsulfoniumsalzen mit Salzen von Phenolen und/oder mit Salzen von Salicyl- und Gallussäurederivaten, Kombinationen von Diaryliodoniumsalzen mit Salzen von Phenolen und/oder mit Salzen von Salicyl- und Gallussäurederivaten, sowie Mischungen hiervon.

3. Gemisch gemäß einem der vorhergehenden Ansprüche, **dadurch gekennzeichnet, dass** das mindestens eine Schmelzmittel ausgewählt ist aus der Gruppe bestehend aus Zimtsäureestern, Aminen mit mindestens 6 Kohlenstoffatomen, Estern von Alkancarbonsäuren mit mindestens 12 Kohlenstoffatomen, 1-Alkanolen mit mindestens 8 Kohlenstoffatomen, Alkancarbonsäureamiden mit mindestens 8 Kohlenstoffatomen, sowie Mischungen hiervon.

4. Gemisch gemäß einem der vorhergehenden Ansprüche, **dadurch gekennzeichnet, dass** der mindestens eine Farbstoff ausgewählt ist aus der Gruppe bestehend aus Leukofarbstoffen, Indikatorfarbstoffen, sowie Mischungen hiervon, wobei der mindestens eine Farbstoff vorzugsweise ausgewählt ist aus der Gruppe bestehend aus Phthaliden, Indolinobenzospiropyranen, Phenothiazinen, Phthalazinonen, Phthalamidinen, Pyridopyridazonen, Pyrrolopyridinonen, Anilinen, Pyrrolen, Triphenylmethanfarbstoffen, Pyridiniumphenolatbetainen, Sulfophthaleinen, Thyraninen, Azofarbstoffen, Fluoranfarbstoffen, sowie Mischungen hiervon.

5. Gemisch gemäß einem der vorhergehenden Ansprüche, **dadurch gekennzeichnet, dass** der mindestens eine thermoplastische Kunststoff ausgewählt ist aus der Gruppe bestehend aus Polyethylenen, Polypropylenen, Polyestern, Polyamiden, Polyvinylchloriden, Polystyrolen, cycloolefinischen Polymeren, sowie Copolymeren, Mischungen und Blends hiervon.

6. Gemisch gemäß einem der vorhergehenden Ansprüche, **dadurch gekennzeichnet, dass** das Gemisch
- 0,05 Gew.-% bis 2 Gew.-% des mindestens einen Farbstoffs bezogen auf das Gesamtgewicht des Gemischs umfasst, und/oder
- 0,1 Gew.-% bis 10 Gew.-% des mindestens einen Schmelzmittels bezogen auf das Gesamtgewicht des Gemischs umfasst, und/oder
- 0,1 Gew.-% bis 5 Gew.-% der mindestens einen Entwicklervorstufe bezogen auf das Gesamtgewicht des Gemischs umfasst.

7. Gemisch gemäß einem der vorhergehenden Ansprüche, **dadurch gekennzeichnet, dass** das Gemisch zusätzlich mindestens ein Pigment und/oder mindestens einen Permanent-Farbstoff enthält.

8. Verfahren zur Herstellung eines thermochromen Kunststoffformkörpers mit irreversibler Farbänderung, umfassend die folgenden Schritte:
a) Herstellung eines Gemischs gemäß einem der vorhergehenden Ansprüche,
b) thermoplastische Verarbeitung des Gemischs, wodurch ein Kunststoffformkörper erhalten wird,
c) Bestrahlung des Kunststoffformkörpers, wodurch die mindestens eine Entwicklervorstufe zum mindestens einen Entwickler umgesetzt wird, wobei die Bestrahlung bei einer Temperatur unterhalb der Schalttemperatur des thermochromen Kunststoffformkörpers erfolgt.

9. Verfahren gemäß Anspruch 8, **dadurch gekennzeichnet, dass** bei der Herstellung des Gemischs in Schritt a)
- der mindestens eine Kunststoff mit einem, mehreren oder allen weiteren Bestandteilen des Gemischs mittels Compoundierung, vorzugsweise in einem Zweischnecken-Extruder, vermischt wird, und/oder
- der mindestens eine Farbstoff, das mindestens eine Schmelzmittel, die mindestens eine Entwicklervorstufe und gegebenenfalls weitere Zusatzstoffe in Form eines Masterbatches eingesetzt werden.

10. Verfahren gemäß einem der Ansprüche 8 oder 9, **dadurch gekennzeichnet, dass** die thermoplastische Verarbeitung in Schritt b)
- mittels Einschicht-Folienextrusion, Mehrschichtfolienextrusion, Spritzguss, Tiefziehen, Kalandrieren, Spritzblasformen und/oder Rotationsformen erfolgt, und/oder
- bei einer Temperatur oberhalb der Schalttemperatur des thermochromen Kunststoffformkörpers, vorzugsweise bei einer Temperatur von 100 °C bis 300 °C, erfolgt, und/oder
- so erfolgt, dass aus dem Gemisch zunächst ein Kunststoffgranulat hergestellt wird, welches anschließend zum Kunststoffformkörper weiterverarbeitet wird, wobei das Weiterverarbeiten zum Kunststoffformkörper vorzugsweise durch Extrusion erfolgt.

11. Verfahren gemäß einem der Ansprüche 8 bis 10, **dadurch gekennzeichnet, dass** die Bestrahlung in Schritt c) mit
- UV-Licht, vorzugsweise im Wellenlängenbereich von 250 nm bis 405 nm, und/oder
- Elektronenstrahlen, und/oder
- γ-Strahlen
erfolgt.

12. Verfahren gemäß einem der Ansprüche 8 bis 11, **dadurch gekennzeichnet, dass** die Schritte a) und b) unter Ausschluss von Tageslicht, vorzugsweise unter Gelblicht, erfolgen.

13. Verfahren gemäß einem der Ansprüche 8 bis 12, **dadurch gekennzeichnet, dass** der Kunststoffformkörper im Anschluss an Schritt b) oder im Anschluss an Schritt c) zu einem mehrschichtigen Verbundsystem weiterverarbeitet wird, welches den Kunststoffformkörper sowie mindestens ein weiteres Material ausgewählt aus der Gruppe bestehend aus Kunststoffen, Metallen, Papier, Karton sowie Mischungen hiervon enthält oder daraus besteht.

14. Thermochromer Kunststoffformkörper mit irreversibler Farbänderung, umfassend mindestens einen thermoplastischen Kunststoff, mindestens einen Farbstoff, mindestens ein Schmelzmittel und mindestens einen Entwickler, wobei der mindestens eine Entwickler dadurch herstellbar ist, dass mindestens eine Entwicklervorstufe durch Bestrahlung unterhalb der Schalttemperatur des thermochromen Kunststoffformkörpers zum mindestens einem Entwickler umgesetzt wird.

15. Thermochromer Kunststoffformkörper gemäß Anspruch 14, **dadurch gekennzeichnet, dass** der thermochrome Kunststoffformkörper in Form einer Folie vorliegt.

16. Thermochromer Kunststoffformkörper gemäß einem der Ansprüche 14 oder 15 herstellbar nach einem Verfahren gemäß einem der Ansprüche 8 bis 13.

17. Mehrschichtiges Verbundsystem, welches einen thermochromen Kunststoffformkörper gemäß einem der Ansprüche 14 bis 16 sowie mindestens ein weiteres Material ausgewählt aus der Gruppe bestehend aus Kunststoffen, Metallen, Papier, Karton sowie Mischungen hiervon enthält oder daraus besteht.

18. Verwendung eines thermochromen Kunststoffformkörpers gemäß einem der Ansprüche 14 bis 16 oder eines mehrschichtigen Verbundsystems gemäß Anspruch 17 als Verpackungsfolie zur Verpackung von thermosensitiven Erzeugnissen und vorzugsweise zur Temperaturkontrolle während der Lagerung und/oder des Transports von Pharmaerzeugnissen, Lebensmitteln, insbesondere Fleisch, nativem Gewebe sowie Kulturen von Pilzen und Bakterien.

19. Verwendung eines thermochromen Kunststoffformkörpers gemäß einem der Ansprüche 14 bis 16 oder eines mehrschichtigen Verbundsystems gemäß Anspruch 17 zur Kontrolle der Temperaturen bei thermischen Verarbeitungsschritten von härtenden Kunststoffen und/oder beim thermischen Fügen von Kunststoffen durch Schweißen und Verpressen.

## Claims

1. Mixture for producing a thermochromic plastic molded body having irreversible color change, comprising at least one thermoplastic resin, at least one dye, at least one fluxing agent, and at least one developer precursor, which can be converted to at least one developer by way of irradiation at a temperature below the switching temperature of the thermochromic plastic molded body.

2. Mixture according to the preceding claim, **characterized in that** the at least one developer precursor is at least one photoacid generator, the at least one photoacid generator preferably being selected from the group consisting of triarylsulfonium salts, diaryliodonium salts, combinations of triarylsulfonium salts with salts of phenols and/or with salts of salicylic and gallic acid derivatives, combinations of diaryliodonium salts with salts of phenols and/or with salts of salicylic and gallic acid derivatives, and mixtures thereof.

3. Mixture according to any one of the preceding claims, **characterized in that** the at least one fluxing agent is selected from the group consisting of cinnamates, amines having at least 6 carbon atoms, esters of alkane carboxylic acids having at least 12 carbon atoms, 1-alkanols having at least 8 carbon atoms, alkane carboxylic acid amides having at least 8 carbon atoms, and mixtures thereof.

4. Mixture according to any one of the preceding claims, **characterized in that** the at least one dye is selected from the group consisting of leuco dyes, indicator dyes, and mixtures thereof, the at least one dye preferably being selected from the group consisting of phthalides, indo-linobenzospiropyranes, phenothiazines, phthalazinones, phthalamidines, pyridopyridazones, pyrrolopyridinones, anilines, pyrroles, triphenylmethane dyes, pyridinium phenolate betains, sulfophthaleins, thyranines, azo dyes, fluoran dyes, and mixtures thereof.

5. Mixture according to any one of the preceding claims, **characterized in that** the at least one thermoplastic resin is selected from the group consisting of polyethylenes, polypropylenes, polyesters, polyamides, polyvinyl chlorides, polystyrenes, cycloolefinic polymers, and copolymers, mixtures and blends thereof.

6. Mixture according to any one of the preceding claims, **characterized in that** the mixture comprises
- 0.05 wt.% to 2 wt.% of the at least one dye, based on the total weight of the mixture, and/or
- 0.1 wt.% to 10 wt.% of the at least one fluxing agent, based on the total weight of the mixture, and/or
- 0.1 wt.% to 5 wt.% of the at least one developer precursor, based on the total weight of the mixture.

7. Mixture according to any one of the preceding claims, **characterized in that** the mixture additionally comprises at least one pigment and/or at least one permanent dye.

8. Method for producing a thermochromic plastic molded body having irreversible color change, comprising the following steps:
a) producing a mixture according to any one of the preceding claims,
b) thermoplastically processing the mixture, whereby a plastic molded body is obtained,
c) irradiating the plastic molded body, whereby the at least one developer precursor is converted to the at least one developer, the irradiation being carried out at a temperature below the switching temperature of the thermochromic plastic molded body.

9. Method according to claim 8, **characterized in that** during the production of the mixture in step a)
- the at least one resin is mixed with one, multiple or all further components of the mixture by means of compounding, preferably in a twin-screw extruder, and/or
- the at least one dye, the at least one fluxing agent, the at least one developer precursor and optionally further additives are used in the form of a master batch.

10. Method according to any one of claims 8 or 9, **characterized in that** the thermoplastic processing in step b)
- is carried out by means of single-layer film extrusion, multi-layer film extrusion, injection molding, deep drawing, calendering, injection blow molding and/or rotational molding, and/or
- is carried out at a temperature above the switching temperature of the thermochromic plastic molded body, preferably at a temperature of 100°C to 300°C, and/or
- in such a way that first a plastic granulate is produced from the mixture, which is then further processed to the plastic molded body, the further processing to the plastic molded body preferably being carried out by way of extrusion.

11. Method according to any one of claims 8 to 10, **characterized in that** the irradiation in step c) is carried out by way of
- UV light, preferably in the wavelength range of 250 nm to 405 nm, and/or
- electron beams, and/or
- γ beams.

12. Method according to any one of claims 8 to 11, **characterized in that** steps a) and b) are carried out under exclusion of daylight, preferably under amber light.

13. Method according to any one of claims 8 to 12, **characterized in that** the plastic molded body, subsequently to step b) or subsequently to step c), is further processed to a multi-layer composite system, which comprises the plastic molded body and at least one further material selected from the group consisting of resins, metals, paper, cardboard and mixtures thereof, or consists thereof.

14. Thermochromic plastic molded body having irreversible color change, comprising at least one thermoplastic resin, at least one dye, at least one fluxing agent and at least one developer, the at least one developer being producible by converting at least one developer precursor to the at least one developer by way of irradiation below the switching temperature of the thermochromic plastic molded body.

15. Thermochromic plastic molded body according to claim 14, **characterized in that** the thermochromic plastic molded body is present in the form of a film.

16. Thermochromic plastic molded body according to any one of claims 14 or 15, producible by a method according to any one of claims 8 to 13.

17. Multi-layer composite system, comprising a thermochromic plastic molded body according to any one of claims 14 to 16 and at least one further material selected from the group consisting of resins, metals, paper, cardboard and mixtures thereof, or consisting thereof.

18. Use of a thermochromic plastic molded body according to any one of claims 14 to 16 or of a multi-layer composite system according to claim 17 as a packaging film for packaging thermosensitive products, and preferably for temperature control during the storage and/or transport of pharmaceutical products, foodstuffs, in particular meat, native tissue, and cultures of fungi and bacteria.

19. Use of a thermochromic plastic molded body according to any one of claims 14 to 16 or of a multi-layer composite system according to claim 17 for controlling the temperatures during thermal processing steps of curing resins and/or during the thermal joining of resins by way of welding and compression.

## Revendications

1. Mélange pour la fabrication d'un corps moulé plastique thermochromique à changement de couleur irréversible, comprenant au moins un thermoplastique, au moins un colorant, au moins un fondant et au moins un précurseur de développeur, qui peut être transformé en au moins un développeur par irradiation à une température au-dessous de la température de commutation du corps moulé plastique thermochromique.

2. Mélange selon la revendication précédente, **caractérisé en ce qu'**il s'agit pour le au moins un précurseur de développeur d'au moins un photogénérateur d'acide, dans lequel le au moins un photogénérateur d'acide est choisi de préférence dans le groupe constitué des sels de triarylsulfonium, sels de diaryliodonium, des combinaisons de sels de triarylsulfonium avec des sels de phénols et/ou avec des sels de dérivés d'acide salicylique et gallique, des combinaisons de sels de diaryliodonium avec des sels de phénols et/ou avec des sels de dérivés d'acide salicylique et gallique, ainsi que des mélanges de ceux-ci.

3. Mélange selon l'une quelconque des revendications précédentes, **caractérisé en ce que** le au moins un fondant est choisi dans le groupe constitué des esters d'acide cinnamique, des amines avec au moins 6 atomes de carbone, des esters d'acides alcanecarboxyliques avec au moins 12 atomes de carbone, des 1-alcanols avec au moins 8 atomes de carbone, des amides d'acide alcanecarboxylique avec au moins 8 atomes de carbone, ainsi que des mélanges de ceux-ci.

4. Mélange selon l'une quelconque des revendications précédentes, **caractérisé en ce que** le au moins un colorant est choisi dans le groupe constitué des leuco-colorants, des colorants indicateurs, ainsi que des mélanges de ceux-ci, dans lequel le au moins un colorant est choisi de préférence dans le groupe constitué des phthalides, des indolinoben-zospiropyranes, des phénothiazines, des phthalazinones, des phthalamidines, des pyridopyridazones, des pyrrolopyridinones, des anilines, des pyrroles, des colorants triphénylméthaniques, des pyridiniumphé-nolatebétaines, des sulfophthaléines, des thyranines, des colorants azoïques, des colorants à fluoranne, ainsi que des mélanges de ceux-ci.

5. Mélange selon l'une quelconque des revendications précédentes, **caractérisé en ce que** le au moins un thermoplastique est choisi dans le groupe constitué des polyéthylènes, des polypropylènes, des polyesters, des polyamides, des polychlorures de vinyle, des polystyrènes, des polymères cyclooléfiniques, ainsi que des copolymères, des mélanges et mélanges homogènes de ceux-ci.

6. Mélange selon l'une quelconque des revendications précédentes, **caractérisé en ce que** le mélange
- comprend 0,05 % en poids à 2 % en poids du au moins un colorant par rapport au poids total du mélange, et/ou
- comprend 0,1 % en poids à 10 % en poids du au moins un fondant par rapport au poids total du mélange, et/ou
- comprend 0,1 % en poids à 5 % en poids du au moins un précurseur de développeur par rapport au poids total du mélange.

7. Mélange selon l'une quelconque des revendications précédentes, **caractérisé en ce que** le mélange contient en plus au moins un pigment et/ou au moins un colorant permanent.

8. Procédé pour fabriquer un corps moulé plastique thermochromique à changement de couleur irréversible, comprenant les étapes suivantes :
a) la fabrication d'un mélange selon l'une quelconque des revendications précédentes,
b) le traitement thermoplastique du mélange, ce qui a pour effet qu'un corps moulé plastique est obtenu,
c) l'irradiation du corps moulé plastique, ce qui a pour effet que le au moins un précurseur de développeur est transformé en au moins un développeur, dans lequel l'irradiation s'effectue à une température au-dessous de la température de commutation du corps moulé plastique thermochromique.

9. Procédé selon la revendication 8, **caractérisé en ce que** lors de la fabrication du mélange à l'étape a)
- le au moins un plastique est mélangé à un, plusieurs ou tous les autres constituants du mélange au moyen d'un compoundage, de préférence dans une extrudeuse bi-vis, et/ou
- le au moins un colorant, le au moins un fondant, le au moins un précurseur de développeur et éventuellement d'autres additifs sous forme d'un mélange maître sont utilisés.

10. Procédé selon l'une quelconque des revendications 8 ou 9, **caractérisé en ce que** le traitement thermoplastique à l'étape b)
- s'effectue au moyen d'une extrusion de film monocouche, extrusion de film multicouche, moulage par injection, emboutissage, calandrage, injection-soufflage et/ou rotomoulage, et/ou
- à une température au-dessus de la température de commutation du corps moulé plastique thermochromique, de préférence à une température de 100 °C à 300 °C, et/ou
- s'effectue, de sorte qu'un granulé plastique, lequel est ensuite traité ultérieurement en corps moulé plastique, est tout d'abord fabriqué à partir du mélange, dans lequel le traitement ultérieur en corps moulé plastique s'effectue de préférence par extrusion.

11. Procédé selon l'une quelconque des revendications 8 à 10, **caractérisé en ce que** l'irradiation à l'étape c) s'effectue avec
- une lumière ultraviolette, de préférence dans la gamme de longueurs d'onde de 250 nm à 405 nm, et/ou
- des faisceaux d'électrons, et/ou
- des rayons y.

12. Procédé selon l'une quelconque des revendications 8 à 11, **caractérisé en ce que** les étapes a) et b) s'effectuent à l'abri de la lumière du jour, de préférence sous lumière jaune.

13. Procédé selon l'une quelconque des revendications 8 à 12, **caractérisé en ce que** le corps moulé plastique est traité ultérieurement à la suite de l'étape b) ou à la suite de l'étape c) en un système composite multicouche, lequel contient le corps moulé plastique ainsi qu'au moins un autre matériau choisi dans le groupe constitué des plastiques, métaux, du papier, carton ainsi que des mélanges de ceux-ci ou en est constitué.

14. Corps moulé plastique thermochromique à changement de couleur irréversible, comprenant au moins un thermoplastique, au moins un colorant, au moins un fondant et au moins un développeur, dans lequel le au moins un développeur peut être fabriqué du fait qu'au moins un précurseur de développeur est transformé par irradiation au-dessous de la température de commutation du corps moulé plastique thermochromique en au moins un développeur.

15. Corps moulé plastique thermochromique selon la revendication 14, **caractérisé en ce que** le corps moulé plastique thermochromique se présente sous forme d'un film.

16. Corps moulé plastique thermochromique selon l'une quelconque des revendications 14 ou 15 pouvant être fabriqué selon un procédé selon l'une quelconque des revendications 8 à 13.

17. Système composite multicouche, lequel contient un corps moulé plastique thermochromique selon l'une quelconque des revendications 14 à 16 ainsi qu'au moins un autre matériau choisi dans le groupe constitué de plastiques, métaux, de papier, carton ainsi que de mélanges de ceux-ci ou en est constitué.

18. Utilisation d'un corps moulé plastique thermochromique selon l'une quelconque des revendications 14 à 16 ou d'un système composite multicouche selon la revendication 17 comme film pour l'emballage de produits thermosensibles et de préférence pour le contrôle de la température pendant le stockage et/ou le transport de produits pharmaceutiques, d'aliments, en particulier de viande, de tissu natif ainsi que de cultures de champignons et bactéries.

19. Utilisation d'un corps moulé plastique thermochromique selon l'une quelconque des revendications 14 à 16 ou d'un système composite multicouche selon la revendication 17 pour le contrôle des températures lors d'étapes de traitement thermique de plastiques durcissants et/ou lors de l'assemblage thermique de plastiques par soudage et compression.
